# NOUVEAU FASCICULE DE BREVET EUROPEEN

(11) **EP 3 156 555 B2**
(45) Date de publication et mention de la décision concernant l'opposition: **02.07.2025**
(45) Mention de la délivrance du brevet: 13.03.2019
(21) Numéro de dépôt: 16190455.2
(22) Date de dépôt: 23.09.2016
(51) Int. Cl.: E04D 13/16, F16B 5/06, F16B 5/10, F16B 21/07, E04F 13/08, F16B 7/20, F16B 11/00

(54) **SUSPENTE POUR MATÉRIAU D'ISOLATION À VERROU RÉVERSIBLE**
AUFHÄNGUNG FÜR DÄMMMATERIAL MIT UMKEHRBARER VERRIEGELUNG
HANGER FOR INSULATION MATERIAL WITH REVERSIBLE LATCH

(30) Priorité: 14.10.2015 FR 1502171
(43) Date de publication de la demande: 19.04.2017
(73) Titulaire: Azerad, Thierry, 75016 Paris (FR)
(72) Inventeur: Azerad, Thierry, 75016 Paris (FR)
(74) Mandataire: Plasseraud IP

(56) Documents cités:
- EP-A1- 3 296 484
- FR-A1- 2 925 929
- US-A- 2 376 279
- US-A- 3 523 395
- US-A- 3 673 913

## Description

La présente invention porte sur une suspente de panneau d'isolation thermique sur une charpente, cette suspente étant fixée sur une portion de la charpente ou un élément solidarisé avec la charpente pour le maintien du panneau d'isolation par rapport à la charpente. La suspente selon la présente invention présente un verrou réversible c'est-à-dire qu'il peut être mis dans une position de verrouillage puis de déverrouillage et inversement.

La présente invention se rapporte aussi à un organe de maintien d'au moins un panneau de matériau isolant thermiquement comprenant au moins une telle suspente associée à une fourrure recouvrant son extrémité non fixée à la charpente ainsi qu'une charpente portant un ensemble d'isolation comprenant au moins deux panneaux de matériau d'isolation maintenus par de telles suspentes.

Il est connu de l'état de la technique une suspente destinée au maintien de matériau d'isolation sur une charpente. Cette suspente comprend une tige dont une première extrémité est destinée à être fixée à la charpente.

De plus, la suspente comprend une coupelle emboîtée autour de la tige et solidarisée à la tige au voisinage de la seconde extrémité par des premiers moyens de solidarisation coopérant avec des moyens de solidarisation complémentaires portés par la tige. Le but de cette coupelle est de maintenir un panneau d'isolation thermique embroché sur la tige entre elle et l'extrémité de la tige fixée à la charpente.

Enfin, un verrou est emboîté autour de la tige en étant plus proche de la seconde extrémité dite extrémité libre de la tige que la coupelle. Ce verrou comprend des seconds moyens de solidarisation avec la tige coopérant avec des seconds moyens de solidarisation complémentaires portés par la tige. Ces seconds moyens de solidarisation sont des moyens de solidarisation par clippage du verrou sur la tige.

Le verrou effectue une action de verrouillage de la coupelle sur la tige, le verrou et la coupelle présentant un évidement central respectif pour le passage de la tige en leur intérieur. Le verrou assure que la coupelle est bloquée sur la tige en position de maintien du panneau d'isolation embroché sur cette tige. Le document FR-2 925 929 décrit une suspente selon le préambule de la revendication 1.

Les avantages d'une telle suspente sont bien connus. On pourra citer entre autres une réduction du pont thermique grâce à une tige de suspente faite en matériau composite avec une garantie des performances d'étanchéité à l'air mais surtout une grande facilité de mise en oeuvre.

Par contre, une telle suspente de l'état de la technique présente des désavantages notoires. Comme premier désavantage et non des moindres, comme la solidarisation du verrou sur la tige de la suspente se fait par clippage, il n'est pas possible de procéder à un déverrouillage ultérieur du verrou de la suspente sans endommager le verrou et la tige qui portent chacun des éléments complémentaires de clippage. Il n'est donc pas possible de récupérer une suspente déjà utilisée pour une réutilisation ultérieure.

Comme ces suspentes ont un prix relativement élevé, ceci entraîne une grande dépense lors de la rénovation ou du réaménagement de l'ensemble d'isolation sur charpente, par exemple lors de changements de panneaux d'isolation thermique car les suspentes déjà utilisées sont perdues pour une nouvelle utilisation.

De plus, comme le clippage se fait à l'intérieur du verrou et n'est pas visible par le monteur, il se peut que le clippage soit mal fait et que le verrouillage ne soit pas effectif. Dans ce cas, la solidité du maintien d'un ou de panneaux embrochés est menacée.

Pour une suspente selon l'état de la technique, il est estimé que l'indication de verrouillage effectif est donnée par un bruit sonore lors du clippage. Ce bruit n'est pas toujours présent et est plus ou moins fort lors du verrouillage du verrou sur la tige, et quand présent, il peut ne pas être entendu par le monteur étant donné que l'environnement dans lequel le monteur travaille peut être bruyant.

Par conséquent, le problème à la base de la présente invention pour une suspente de panneau de matériau isolant comprenant une tige, une coupelle et un verrou est de garantir une réversibilité de la configuration de verrouillage, et de proposer un mode de verrouillage répondant mieux et de façon simple à des contraintes de montage/démontage qui se posent pour le monteur.

A cet effet, on prévoit selon l'invention, une suspente telle que définie dans la revendication 1 (de sorte que dans cette configuration de verrouillage, les positions respectives de coupelle et du verrou sont figées par rapport à la tige), Le verrou présente, au moins partiellement à sa périphérie, une rainure pour l'insertion dans une fourrure, ce grâce à quoi la suspente qui présente seulement trois pièces est adaptée pour le montage d'un parement intérieur pouvant se retirer.

Ainsi, comme un démontage ultérieur du verrou est possible, une suspente déjà utilisée peut resservir à nouveau, étant donné que son déverrouillage ne va pas l'endommager. Le verrouillage se fait par pivotement du verrou par rapport à l'axe longitudinal de la tige, avantageusement par un quart de tour et le déverrouillage se fait dans l'autre sens.

Ceci n'est pas le cas d'une solidarisation par clippage conformément à l'état de la technique, pour laquelle les formes de clippage ne peuvent être qu'endommagées ou détruites par une tentative de déverrouillage. De plus, une telle tentative de déverrouillage peut être vaine dans ce cas, le clippage faisant opposition.

Il s'ensuit qu'un tel montage de la suspente selon la présente invention est réversible sans endommagement du verrou ou de la tige. La suspente peut être verrouillée et déverrouillée autant de fois qu'il est souhaité. Ceci est particulièrement utile dans le cas où le monteur veut vérifier ou intervenir sur l'étanchéité de l'ensemble, notamment sur un film intercalé entre la coupelle et le verrou.

Le verrou et la tige sont en relation bloquée l'un par rapport à l'autre par une connexion de type baïonnette dans la configuration de verrouillage. Par exemple, au moins deux ergots de la connexion de type baïonnette sont portés par la tige et adaptés pour pénétrer dans au moins une gorge définie par le verrou lors du pivotement du verrou. Ce mouvement de verrouillage est simple à faire et ne peut pas prêter à incertitude quant à savoir si le verrouillage a été ou non effectué.

Les seconds moyens de solidarisation amovible comprennent au moins une gorge dans laquelle pénètre au moins deux ergots (de la connexion de type baïonnette) en tant que seconds moyens de solidarisation complémentaires ou inversement. Un tel mode de solidarisation est aisément amovible avec un verrou pouvant être facilement verrouillé ou déverrouillé sans endommagement des ergots ou de la gorge. De plus, sa résistance mécanique à l'arrachement est beaucoup plus élevée que celui d'un verrouillage par clip.

Avantageusement, ladite au moins une gorge est associée à une rampe d'introduction pour le guidage desdites au moins deux baïonnettes vers ladite au moins une gorge. De telles rampes d'introduction facilitent l'assemblage pour éviter toute perte de temps de montage pour le monteur.

Selon une particularité, au moins une surface de came est prévue sur la tige ou sur le verrou pour réaliser un guidage dans la connexion de type baïonnette, de façon à ce que, lors d'une rotation relative entre le verrou et la tige pour parvenir à la configuration de verrouillage, un serrage suivant la direction de l'axe longitudinal est créé et/ou accentué entre :
- une portion annulaire du verrou, de préférence une base du verrou, et
- une portion annulaire en vis-à-vis qui appartient à la coupelle.

Cette surface de came offre un avantage pour venir en contact sur la coupelle et ainsi bloquer axialement la coupelle lorsque cette dernière est déjà en butée axiale contre un ou des reliefs de la tige, et ceci en permettant un désengagement ultérieur du verrou.

Avantageusement, la première extrémité de la tige (formant également l'extrémité de la suspente) présente une platine sensiblement plane destinée à être en appui contre une portion de la charpente, la platine présentant des alésages pour le passage d'éléments de fixation sur la charpente, chaque alésage présentant un col de maintien destiné à entourer l'élément de fixation associé.

La platine de forme plane s'applique sur toute sa surface contre une portion de charpente pouvant être elle-même plane. Ceci permet notamment de maintenir les moyens de fixation, avantageusement des vis, lors de leur montage, notamment par vissage. Les moyens de fixation restent dans le col de maintien sensiblement orientés perpendiculairement à la surface de la charpente dans laquelle ils vont être enfoncés. Les cols assurent un confort de montage en maintenant provisoirement les moyens de fixation, ce qui libère une main du monteur.

Avantageusement, les premiers moyens de solidarisation portés par la coupelle sont sous la forme de moyens de clippage intérieurs à la coupelle et coopérant avec une rainure portée par la tige en tant que premiers moyens de solidarisation complémentaires, la partie de la coupelle la plus interne à la tige portant une série de dents pointant en direction de la première extrémité de la tige quand la coupelle est solidarisée à la tige. Un clippage peut être suffisant en tenue pour la coupelle étant donné que sa tenue est renforcée par la résistance du verrou, notamment quand des baïonnettes sont utilisées. Les dents s'insèrent dans un panneau d'isolation embroché par la tige et servent au maintien de la coupelle par rapport à ce panneau.

Les moyens de clippage intérieurs à la coupelle sont au nombre de trois symétriquement répartis à 120° tout autour de l'évidement central de la coupelle. L'effort de clippage est alors également réparti tout autour de l'évidement central traversant la coupelle. Les trois clips disposés à 120° centrent la coupelle au moment du montage et assurent le maintien du panneau d'isolation embroché sur la tige.

Avantageusement, la tige est en polyamide injecté à 50% fibre de verre, la coupelle en polypropylène copolymère injecté et le verrou en polyamide 66 à 30% de fibre de verre. La rupture thermique ainsi obtenue est optimale. Du fait qu'il n'y a pas d'insert métallique, non nécessaire étant donné la rigidité de la matière employée pour la tige, il n'y a pas de conduction thermique.

Le choix d'un polymère technique haut de gamme donne donc une tige incassable, non déformable et à très faible conduction thermique. Une section en croix de cette tige peut assurer une excellente rigidité et une bonne tenue aux chocs, y compris pour la version la plus longue des tiges.

Selon une particularité, au moins une face annulaire sensiblement plane, définie par la coupelle et/ou par le verrou, présente une couche adhésive et est adaptée pour être collée contre une face annulaire correspondante d'un film embroché par la tige. Une telle disposition permet de venir placer un film, par exemple un pare-vapeur, entre la coupelle et le verrou, en perçant ce film par la tige puis en venant encercler la perforation par une zone de contact annulaire qui peut être étanche au moins à l'eau liquide. Un tel film, séparé du matériau d'isolation par la coupelle, peut ainsi être maintenu parallèlement à une couche d'isolation thermique.

En variante, la face annulaire sensiblement plane, définie par la coupelle et/ou par le verrou, est adaptée pour être accolée avec une pression d'appui contre une face annulaire correspondante du film.

Selon une particularité, la coupelle peut présenter une bande ou couche adhésive, typiquement revêtue d'un opercule de protection, la bande ou couche adhésive étant portée par une collerette de la coupelle formée à l'opposée d'une extrémité de la coupelle qui est proximale par rapport au matériau d'isolation.

Avantageusement, dans une première forme de réalisation, le verrou présente une forme bombée de section circulaire décroissante, avec une base du verrou orientée vers la coupelle plus large qu'un sommet du verrou se trouvant le plus externe à la tige, la périphérie du verrou portant deux oreilles diamétralement opposées et faisant saillie du verrou servant, d'une part, de moyens de préhension du verrou pour les doigts d'un monteur lors de son positionnement sur la tige et lors d'un pivotement autour de l'axe longitudinal de la tige pour le verrouillage et, d'autre part, de moyens de reconnaissance visuelle d'un positionnement en verrouillage du verrou sur la tige de par la position des oreilles par rapport à l'axe longitudinal de la tige.

Le verrou en tant que pièce monobloc est facile à assembler avec un ressenti du verrouillage effectué par indexage. En plus d'un repère visuel conséquent, les oreilles du verrou peuvent empêcher la poursuite du montage d'une fourrure tant que le verrou n'est pas en position.

Avantageusement, dans une seconde forme de réalisation, le verrou présente, à son extrémité opposée à la coupelle, un sommet de forme bombée de section circulaire décroissante vers l'extrémité opposée et, à son extrémité en vis-à-vis de la coupelle, une base du verrou orientée vers la coupelle, une forme allongée servant de rallonge en raccordant la base et le sommet, la base, le sommet et la forme allongée étant d'un seul tenant.

Selon un autre objet de l'invention, on prévoit un organe de maintien d'au moins un panneau de matériau isolant caractérisé en ce qu'il comporte une fourrure et au moins une telle suspente, dans lequel organe le verrou de chaque suspente est introduit dans une fourrure sensiblement rectiligne en présentant sur toute sa longueur deux bords longitudinaux recourbés à 90° définissant entre eux une largeur de fourrure et présentant leurs extrémités libres recourbées l'une vers l'autre, la largeur de la fourrure étant équivalente au diamètre de la base du verrou avec en plus un jeu juste suffisant pour l'introduction du verrou, le verrou présentant au moins partiellement à sa périphérie une rainure pour l'introduction des extrémités libres recourbées l'une vers l'autre de la fourrure en son intérieur.

Ceci permet une insertion rapide du verrou dans la fourrure en même temps que son maintien après insertion.

Avantageusement, quand le verrou présente des oreilles, cette introduction n'est possible que quand les oreilles sont orientées dans la longueur de la fourrure, les oreilles formant ainsi des moyens d'interdiction de poursuite du montage de la suspente.

Comme la solidarisation du verrou se fait par pivotement du verrou autour de l'axe longitudinal de la tige, avantageusement en un quart de tour, en position de non verrouillage les oreilles dépassent latéralement par rapport à la fourrure et font obstacle à une introduction du verrou de la suspente dans la fourrure. Par contre, une fois pivotées de 90° soit un quart de tour, les oreilles sont orientées dans la longueur de la fourrure et ne font plus obstacle à une introduction du verrou dans la fourrure.

Il est ainsi obtenu une sorte d'escamotage des oreilles. D'autres formes d'escamotage peuvent être possibles. Il s'ensuit que la fourrure ne peut être montée que sur des suspentes verrouillées. En effet, si le verrouillage du verrou d'une suspente a été oublié ou s'il n'est que partiel, la fourrure ne pourra pas recevoir une telle suspente. Ceci représente un système anti-erreur lors de la pose.

Avantageusement, quand le verrou présente une forme allongée servant de rallonge au verrou, un espace est dégagé entre la coupelle et la fourrure tout autour de la forme allongée, cet espace servant de passage pour divers éléments comme des gaines électriques, VMC ou autres.

Selon un autre objet de l'invention, on prévoit une charpente portant un ensemble d'isolation comprenant au moins deux panneaux de matériau d'isolation, caractérisée en ce qu'elle comprend au moins un tel organe comportant au moins deux suspentes, les secondes extrémités desdites au moins deux suspentes étant disposées espacées dans la longueur de la fourrure tandis que les premières extrémités desdites au moins deux suspentes sont fixées à un élément respectif faisant partie de ou étant solidarisé avec la charpente, les tiges desdites au moins deux suspentes s'étendant parallèlement l'une à l'autre, un panneau respectif desdits au moins deux panneaux de matériau étant embroché par chaque suspente en étant intercalé entre la première extrémité de la suspente et sa coupelle, la coupelle appuyant sur le panneau, lesdits au moins deux panneaux de matériau étant adjacents l'un à l'autre.

Avantageusement, entre lesdites au moins deux suspentes est intercalé un panneau d'isolation d'appui, chaque panneau embroché reposant au moins partiellement sur deux panneaux d'appui. Ceci permet une double isolation avec deux couches de panneaux de matériau d'isolation en même temps qu'un appui des panneaux embrochés sur des panneaux d'appui.

Avantageusement, un film plastique recouvre lesdits au moins deux panneaux embrochés entre la coupelle et le verrou de chaque suspente, le film plastique étant percé par chaque tige des suspentes. Ceci renforce l'étanchéité de l'ensemble et son isolation.

Dans le cadre de l'invention, on prévoit un procédé de montage d'un ensemble d'isolation comprenant au moins deux panneaux de matériau d'isolation sur une telle charpente, caractérisé par les étapes suivantes :
- fixation desdites au moins deux suspentes en divers points de la charpente, les tiges desdites au moins deux suspentes s'étendant parallèlement, avec mise au cordeau desdites au moins deux suspentes pour que les tiges dépassent de la charpente de la même longueur,
- embrochage d'un panneau de matériau sur chaque tige de suspente,
- mise en place de la coupelle sur chaque tige et solidarisation de la coupelle sur chaque tige par clippage pour le maintien de chaque panneau de matériau,
- mise en place du verrou sur chaque tige, le cas échéant, après insertion d'un film de protection commun à toutes les tiges entre chaque coupelle et chaque verrou,
- solidarisation du verrou sur chaque tige par pivotement du verrou par rapport à l'axe longitudinal de la tige pour le verrouillage de chaque verrou sur sa suspente, ce pivotement entraînant l'engagement de seconds moyens de solidarisation amovible portés par le verrou avec des seconds moyens de solidarisation amovible complémentaires portés par la tige de chaque suspente en permettant un démontage ultérieur du verrou de la tige par pivotement inverse,
- insertion des verrous desdites au moins deux suspentes dans au moins une fourrure, cette insertion n'étant possible que si le verrouillage de chaque verrou a été effectif.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1A est une vue éclatée d'une suspente selon un mode de réalisation conforme à la présente invention,
- la figure 1B est une vue latérale qui illustre une extrémité de la tige montrée à la figure 1A,
- la figure 2 est une représentation schématique du montage d'un matériau isolant et d'un film permis par la suspente de la figure 1A,
- les figures 3, 4 et 5A sont respectivement une coupe, une vue de dessus et une vue en perspective d'une coupelle d'une suspente selon un mode de réalisation conforme à la présente invention,
- la figure 5B montre en coupe une configuration de verrouillage dans laquelle des reliefs en vis-à-vis sont prévus respectivement sur la coupelle et le verrou,
- la figure 5C montre en coupe une configuration de verrouillage dans laquelle un film est maintenu entre la coupelle et le verrou, en étant collé à la coupelle,
- les figures 6, 7 et 8A sont respectivement une coupe, une vue de dessus et une vue en perspective d'un verrou d'une suspente selon une première forme de réalisation conforme à la présente invention, le verrou comportant des oreilles dans cette première forme,
- la figure 8B illustre schématiquement la fonction de maintien d'une fourrure permise par la suspente, grâce au verrou,
- les figures 9 et 10 sont respectivement une coupe et une vue en perspective d'un verrou d'une suspente selon une deuxième forme de réalisation conforme à la présente invention, le verrou comportant un élément formant rallonge dans cette deuxième forme.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions des différentes pièces peuvent ne pas être représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à toutes les figures, la présente invention concerne une suspente 1 destinée au maintien de matériau d'isolation 20 sur une charpente.

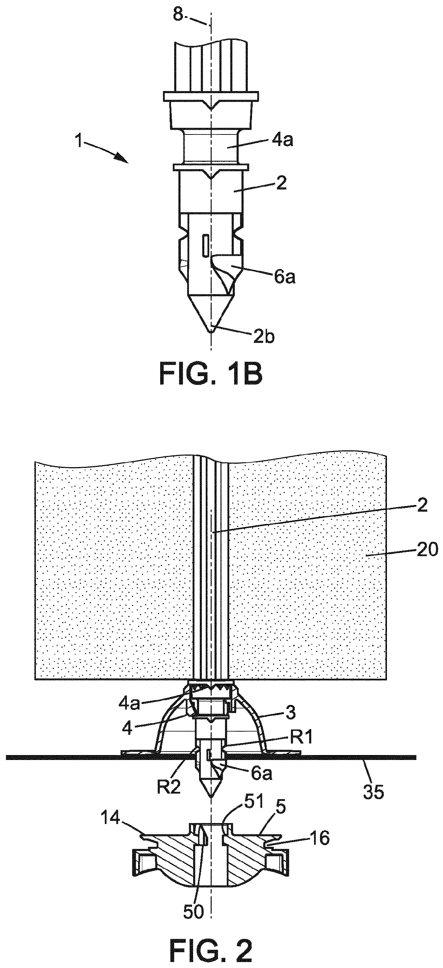

Le matériau d'isolation 20 (figure 2) est avantageusement enroulé sous forme d'une bande bobinée et découpé préalablement en panneaux rectangulaires. Ce sont de tels panneaux rectangulaires qui sont embrochés dans une suspente 1 respective selon la présente invention, cette suspente 1 comprenant essentiellement une tige 2, une coupelle 3 et un verrou 5, comme il va maintenant être détaillé.

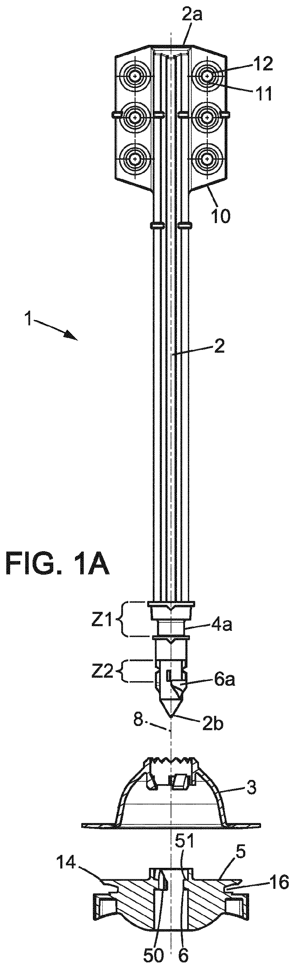

En référence aux figures 1A-1B et 2, la suspente 1 comprend une tige 2 dont une première extrémité 2a est destinée à être fixée à la charpente, ceci avantageusement par une platine 10. Il est possible de disposer de plusieurs types de suspentes 1 avec des tiges 2 différentes selon l'épaisseur du matériau d'isolation 20 utilisé.

Plusieurs versions de longueur différente de tige 2 sont appropriées pour recevoir une épaisseur correspondante de panneau d'isolation allant de 160 à 540 mm. Par exemple, une tige 2 peut présenter une longueur de 200, 280, 360 et 440 mm en prenant en compte une platine 10 de 40 mm disposée à la première extrémité 2a de la tige 2.

La tige 2 peut être en polyamide injecté à 50% fibre de verre. Une possible section en croix de la tige 2 peut assurer une excellente rigidité et une bonne tenue aux chocs, y compris pour la version la plus longue de tige 2 soit 440 mm.

Comme deuxième élément, la suspente 1 comprend aussi une coupelle 3 emboîtée autour de la tige 2 et solidarisée à la tige 2 au voisinage d'une seconde extrémité 2b par des premiers moyens de solidarisation 4 coopérant avec des moyens de solidarisation complémentaires 4a portés par la tige 2. La coupelle 3 peut être réalisée en polypropylène copolymère injecté.

Comme il est particulièrement bien vu notamment aux figures 1A, 3 et 5A, la coupelle 3 peut être optionnellement évasée, ici en forme de cloche avec un sommet de cloche annulaire. La coupelle 3 présentet un évidement central 3a pour le passage de la tige 2 sur son côté tourné vers la première extrémité 2a de la tige 2 et une collerette 3b sur son côté tournée vers la seconde extrémité 2b de la tige 2. Le sommet de cloche de la coupelle 3 traversé par l'évidement central 3a présente des dents 13 autour de cet évidement central 3a.

Comme troisième élément de la suspente 1, un verrou 5 est emboîté autour de la tige 2 en étant plus proche de la seconde extrémité 2b que la coupelle 3. Le verrou 5 comprend des seconds moyens de solidarisation 6 avec la tige 2 coopérant avec des seconds moyens de solidarisation complémentaires 6a portés par la tige 2. Dans une configuration de verrouillage de la suspente 1, la coupelle 3 est maintenue dans une première zone de réception Z1 (figure 1) prédéfinie de la tige 2, qui inclut par exemple une rainure 4a circonférentielle, tandis que le verrou 5 vient se bloquer dans une deuxième zone de réception Z2 prédéfinie de la tige 2, ici axialement espacée de la première zone de réception Z1. Le maintien en position de la coupelle 3 peut résulter d'un simple clippage dans la rainure 4a, comme bien visible sur la figure 2.

En complément du clippage qui optionnellement peut tolérer un certain jeu, il peut être prévu que le verrou 5 effectue une action de verrouillage de la coupelle 3 sur la tige 2, en s'appuyant axialement contre une face externe de la coupelle 3. Le verrou 5 peut être en matière rigide (sans aucune partie flexible), par exemple en polyamide 66 à 30% de fibre de verre.

On peut observer que le verrou 5 est ici du type non fileté pour s'engager sur la tige 2. Les seconds moyens de solidarisation 6 sont formés sur le verrou 5 du côté d'une base 14 de ce verrou 5 et s'insèrent dans la deuxième zone de réception Z2 sans qu'il soit nécessaire d'exercer de rotation de plus d'un demi-tour.

La coupelle 3 et le verrou 5 présentent un évidement central respectif 3a, 5a respectif pour le passage de la tige 2 en leur intérieur et sont donc portés autour de la tige 2 de la suspente 1 le long d'un axe longitudinal 8 de la tige 2. La collerette 3b de la coupelle 3 est en vis-à-vis et en appui contre la base 14 du verrou 5, le cas échéant avec l'incorporation d'un film en plastique 35 entre eux. Sur la figure 2, on peut voir que le film 35 peut être tendu et fixé entre le matériau d'isolation thermique 20 et le verrou 5 servant typiquement de support à un parement intérieur. Dans ce cas, le film 35 peut être pincé dans une zone annulaire.

Au moins une surface de came 50 est prévue, ici sur le verrou 5, pour réaliser un guidage dans une connexion de type baïonnette, de façon à ce que, lors d'une rotation relative entre le verrou 5 et la tige 2 pour parvenir à la configuration de verrouillage, un serrage suivant la direction de l'axe longitudinal 8 est créé et/ou accentué entre une portion annulaire du verrou 5, de préférence la base 14, et une portion annulaire en vis-à-vis qui appartient à la coupelle 3. Dans l'exemple non limitatif de la figure 2, ce serrage permet un pincement du film 35. Bien entendu, la surface de came peut alternativement être prévue sur la tige 2 afin d'obtenir le même effet.

Dans l'exemple non limitatif des figures, on trouve dans la deuxième zone de réception Z2 une première face et une deuxième face, opposée à la première face, qui sont séparés entre elles suivant la circonférence de la tige 2 par deux reliefs R1, R2 qui font saillie radialement vers l'extérieur sur la tige 2. Ces deux reliefs R1, R2 forment des butées d'arrêt pour limiter à un quart de tour la rotation relative du verrou 5 par rapport à la tige 2 lorsque les seconds moyens de solidarisation 6 ont été insérés dans la deuxième zone de réception Z2. Les première et deuxième faces sont en outre délimitées par des butées avant et arrière. On comprend que les seconds moyens de solidarisation 6 peuvent être à la fois bloqués en coulissement par les butées avant et arrière et bloqués suivant un sens de rotation du fait de l'engagement contre les reliefs R1, R2.

Plus généralement selon la présente invention, les seconds moyens de solidarisation 6 sont des moyens de solidarisation amovible permettant un démontage ultérieur du verrou 5 de la tige 2, ce qui permet de récupérer entièrement la suspente 1 pour une réutilisation.

De plus, la solidarisation du verrou 5 avec la tige 2 s'effectue par pivotement du verrou 5 par rapport à l'axe longitudinal 8 de la tige 2 s'étendant entre les deux extrémités 2a, 2b de la tige 2.

Un serrage entre le verrou 5 et la coupelle 3 peut être préféré. Dans ce cas, la coupelle 3 ainsi verrouillée sur la tige 2 par le verrou 5 retient le panneau d'isolation 20 embroché sur la tige 2 contre une chute sous l'action de la gravité, la suspente 1 étant fréquemment dans une position verticale ou proche de la verticale. Cependant, même une autre position finale du verrou 5, typiquement légèrement espacée par rapport à la coupelle 2, convient aussi pour autant que la coupelle 3 soit clippée ou fixée d'une façon robuste à la tige 2 (ici dans une rainure 4a ayant une profondeur importante, supérieure à 1 mm).

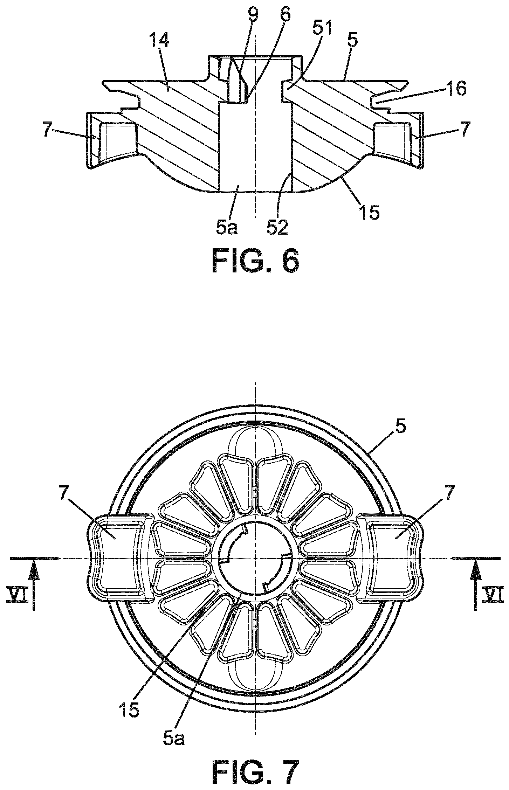

Bien visible sur la figure 6, les seconds moyens de solidarisation amovible 6 comprennent au moins une gorge 6 dans laquelle pénètre au moins deux ergots 6a (ergots d'une connexion baïonnette) formés sur la tige 2 en tant que seconds moyens de solidarisation amovible complémentaires ou inversement. Les ergots 6a portés par la tige 2 pénètrent dans la ou les gorges 6 par pivotement du verrou 5 par rapport à l'axe longitudinal 8 de la tige 2. Il peut y avoir une gorge 6 par ergot de baïonnette ou une seule gorge 6 pour au moins deux ergots 6a.

La ou les gorges 6 peuvent être associées à une rampe d'introduction 9 pour le guidage desdites au moins deux ergots de baïonnette 6a vers la gorge 6. Le verrouillage du verrou 5 sur la tige 2 en est ainsi amélioré. Chaque gorge 6 est délimitée supérieurement par le rebord d'un relief interne 51 qui fait saillie vers l'intérieur depuis une face cylindrique 52 délimitant l'évidement central 5a. La forme effilée vers le haut de chaque relief interne 51, comme bien visible sur la figure 6, permet de définir au moins une rampe d'introduction 9.

Comme précédemment mentionné, la première extrémité 2a de la suspente 1 présente une platine 10 sensiblement plane destinée à être en appui contre une portion de la charpente, la platine 10 présentant des alésages 11 pour le passage de moyens de fixation sur la charpente, chaque alésage 11 présentant un col de maintien 12 destiné à entourer l'élément de fixation associé.

A la figure 1A, il n'est référencé qu'un alésage 11 ou col de maintien 12 sur les six alésages ou cols de maintien portés par la platine 10 mais ce qui est énoncé pour l'alésage ou le col de maintien référencé est valable pour tous les alésages ou cols de maintien.

La platine 10 de la tige 2 permet une fixation classique de la tige 2 sur la charpente, par exemple le chevron de la toiture, ceci en utilisant comme moyen de fixation des vis à bois, avantageusement par paires, préférentiellement trois paires pour un total de six vis passant par six alésages 11 de la platine.

Les cols de maintien 12, aussi dénommés fûts, recevant les moyens de fixation, avantageusement des vis, peuvent présenter une hauteur de 8 mm. Dans le cas des vis, ce qui est aussi extrapolable à d'autres moyens de fixation, ceci permet au monteur de prépositionner ses vis sur la platine 10 et ainsi de travailler la visseuse dans une main et la tige 2 présentant sa platine 10 munie de ses vis dans l'autre.

La platine 10 peut présenter une section au moins égale à 64 mm² offrant ainsi une surface à la rupture optimale, fréquemment plus élevée de 30% que celle d'une platine de l'état de la technique.

En référence aux figures 2, 3 et 4, il va maintenant être donné un mode de réalisation des moyens de solidarisation entre la coupelle 3 et la tige 2. Ces moyens de solidarisation précédemment dénommés premiers moyens de solidarisation 4 quand portés par la coupelle 3 sont sous la forme de moyens de clippage intérieurs à la coupelle 3. Ces premiers moyens de solidarisation 4 coopèrent avec une rainure 4a formée sur la tige 2 en tant que premiers moyens de solidarisation complémentaires.

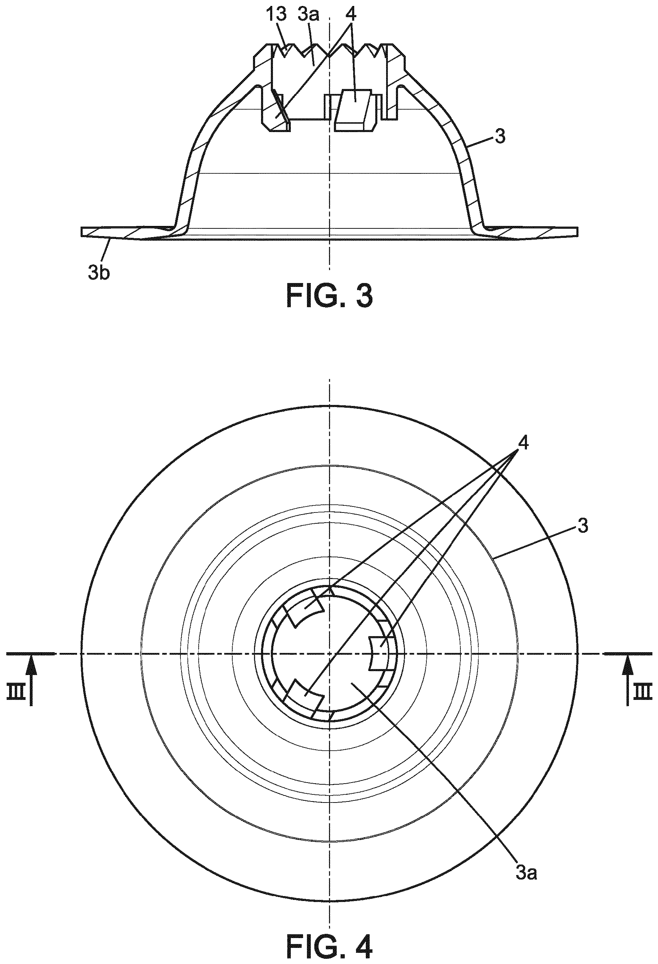

Comme il peut être vu notamment à la figure 4, les moyens de clippage 4 intérieurs à la coupelle 3 sont au nombre de trois symétriquement répartis à 120° tout autour de l'évidement central 3a de la coupelle 3 pour le passage de la tige.

Dans le cas d'une conception évasée, la partie de la coupelle 3 la plus interne à la tige 2, ou sommet de cloche, peut porter, tout autour de l'évidement central 3a, une série de dents 13 pointant en direction de la première extrémité 2a de la tige 2 quand la coupelle 3 est solidarisée à la tige 2. Ces dents 13 sont destinées à s'enfoncer dans la matière du panneau de matériau isolant 20 quand celui-ci est intercalé entre la platine 10 de la tige 2 et la coupelle 3. La coupelle 3 est pressée contre ce panneau de matériau avant d'être clippée sur la tige 2.

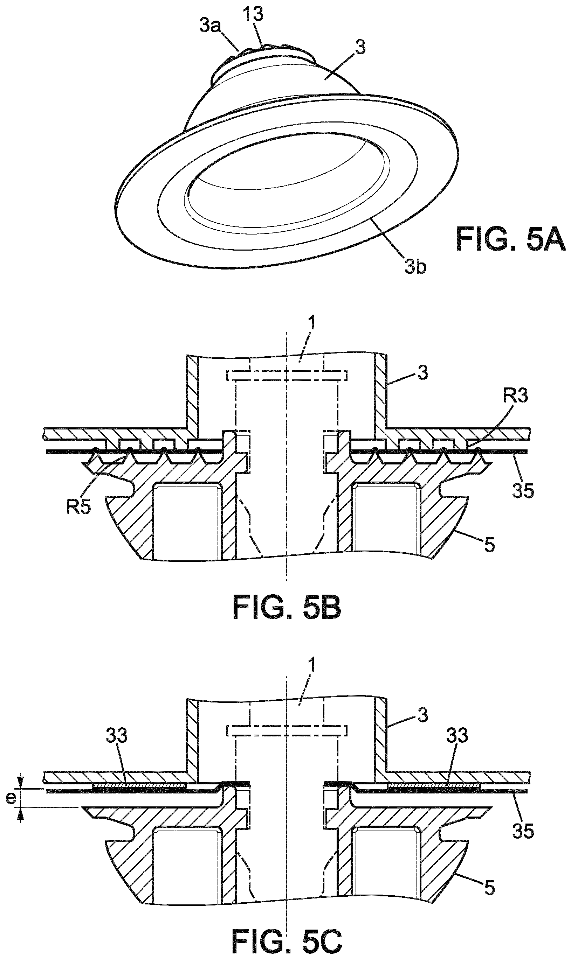

La série de dents 13 peut également être prévue avec d'autres conceptions de la coupelle 3, sans modification significative de la section de l'espace intérieur creux (comme illustré par exemple sur les figures 5B et 5C).

Deux arrêtes de dents 13 adjacentes peuvent former un angle de 90° entre elles. Plus la surface de contact de la coupelle 3 avec le panneau de matériau est grande, meilleure est le maintien qu'exerce la coupelle 3 sur le panneau. Un nombre élevé de dents 13 profondes accroît aussi le maintien.

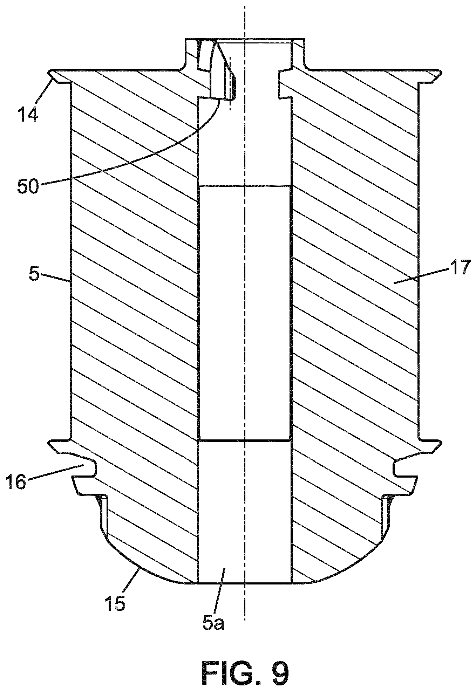

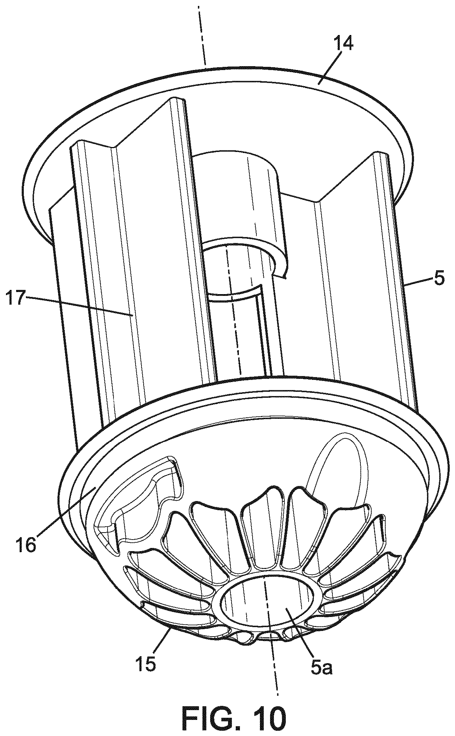

Des caractéristiques préférentielles du verrou 5 de la suspente 1 vont maintenant être décrites. Deux formes de réalisation du verrou 5 vont ainsi être décrites à savoir un verrou 5 présentant des oreilles, comme montré aux figures 6 à 8A, et un verrou 5 comportant une forme allongée servant de rallonge, comme montré aux figures 9 et 10.

Dans les deux formes de réalisation, le verrou 5 peut présenter un sommet 15 de forme bombée avec une section circulaire décroissante plus on s'éloigne de la première extrémité 2a de la tige 2. Le verrou 5 présente aussi une base 14 orientée vers la coupelle 3 plus large que le sommet 15 du verrou 5 se trouvant le plus externe à la tige 2. Le verrou 5 présente ainsi au moins partiellement une forme concave tournée vers la première extrémité 2a de la tige 2 fixée à la charpente.

Dans la première forme de réalisation du verrou, la périphérie du verrou 5 peut porter deux oreilles 7 diamétralement opposées et faisant saillie du verrou 5. Ces oreilles 7 servent, d'une part, de moyens de préhension du verrou 5 pour les doigts d'un monteur lors de son positionnement sur la tige 2 et lors d'un pivotement autour de l'axe longitudinal 8 de la tige 2 pour le verrouillage.

D'autre part, ces oreilles 7 servant au moins de moyens de reconnaissance visuelle 7 d'un positionnement en verrouillage du verrou 5 sur la tige 2 de par la position des oreilles 7 par rapport à l'axe longitudinal 8 de la tige 2. Dans un mode de réalisation préférentielle de l'invention, les oreilles 7 interdisent de plus le montage du verrou 5 dans une fourrure, ce qui sera ultérieurement décrit.

Dans la deuxième forme de réalisation du verrou, il est intercalé entre la base 14 et le sommet 15 une forme allongée 17 servant de rallonge au verrou 5 en raccordant la base 14 et le sommet 15. La base 14, le sommet 15 et la forme allongée 17 peuvent être d'un seul tenant.

La forme allongée 17 peut être une forme cylindrique ou comporter des nervures verticales, avantageusement deux nervures périphériques en vis-à-vis sur le verrou 5 sous forme de plaques donc en ne réalisant pas une pièce fermée. C'est cette dernière forme de réalisation qui est montrée à la figure 10.

Ainsi, le verrou 5 peut comprendre un espace creux le traversant, créant ainsi un espace technique restreint, ceci pour le passage de gaines électriques ou VMC. Ceci est valable pour l'espace entourant la forme allongée 17 et rendu disponible par l'écartement entre le sommet 15 et la base 14 du verrou 5.

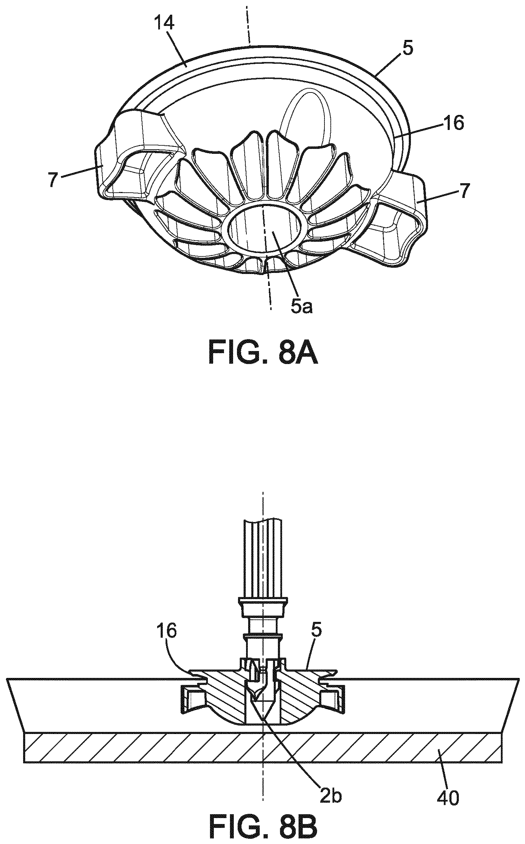

Pour ces deux types de verrou 5, il est classique de recouvrir le verrou 5 appartenant à une telle suspente 1 d'une fourrure en l'intégrant dans l'intérieur de la fourrure 40 délimitée par deux bords longitudinaux repliés à 90°. Il est ainsi obtenu un organe de maintien d'au moins un panneau de matériau isolant avec au moins une suspente 1. La figure 8B illustre la connexion d'une fourrure 40 au verrou 5 (afin d'alléger le dessin, seule la tige 2 est montrée en sus du verrou 5 et de la coupelle 8).

Un tel organe de maintien peut cependant contenir plusieurs suspentes 1 dont les verrous 5 respectifs sont logés dans une fourrure. Dans ce cas, le verrou 5 de chaque suspente 1 peut être introduit dans une fourrure sensiblement rectiligne et de forme allongée en présentant sur toute sa longueur deux bords longitudinaux recourbés à 90° définissant entre eux une largeur de fourrure et présentant leurs extrémités libres recourbées l'une vers l'autre.

Cette largeur de la fourrure 40 est équivalente au diamètre de la base 14 du verrou 5 avec en plus un jeu suffisant pour l'introduction du verrou 5, la base 14 du verrou 5 étant la partie du verrou 5 orientée vers la coupelle 3. Le verrou 5 peut présenter au moins partiellement à sa périphérie une rainure 16 pour l'introduction en son intérieur des extrémités libres recourbées l'une vers l'autre des deux bords longitudinaux recourbés à 90° de la fourrure.

Dans la première forme de réalisation préférentielle du verrou 5 selon la présente invention, le verrou 5 étant muni d'oreilles 7, l'introduction du verrou 5 dans la fourrure 40 n'est possible que quand les oreilles 7, en tant que moyens d'interdiction 7 de poursuite du montage de la suspente 1, sont orientées dans la longueur de la fourrure.

Ainsi, des oreilles 7 du ou des verrous 5 dépassant latéralement par rapport à la fourrure 40 interdisent la poursuite du montage de la suspente 1 en empêchant l'introduction du ou des verrous 5 dans la fourrure, ce qui correspond à un verrou 5 non pivoté par rapport à l'axe longitudinal 8 de la tige 2, donc non verrouillé.

Au contraire un verrou 5 pivoté pour être verrouillé, par exemple d'un quart de tour ou de trois quarts de tour, présente lors de l'introduction du verrou 5 dans la fourrure ses oreilles 7 orientées dans la longueur de la fourrure 40 donc n'empêchant pas cette introduction car pour ainsi dire en position d'escamotage par rapport à la fourrure.

Dans la deuxième forme de réalisation préférentielle du verrou 5 selon la présente invention, le verrou 5 présentant une forme allongée 17 servant de rallonge au verrou 5, un espace est dégagé entre la coupelle 3 et la fourrure tout autour de la forme allongée 17, cet espace servant de passage pour divers éléments comme des gaines électriques, VMC ou autres.

La présente invention concerne aussi une charpente ou un élément de construction portant un ensemble d'isolation comprenant au moins deux panneaux de matériau d'isolation avec au moins deux suspentes 1 et une fourrure recevant les verrous 5 respectifs des deux suspentes 1.

Dans ce cas, les secondes extrémités 2b desdites au moins deux suspentes 1 sont disposées espacées dans la longueur de la fourrure, ceci par exemple avec un espacement de la largeur d'un panneau d'isolation. Les premières extrémités des deux suspentes 1 sont fixées à un élément respectif faisant partie de ou étant solidarisé avec la charpente, par exemple un chevron de toiture. Les tiges 2 des deux suspentes 1 s'étendent parallèlement l'une à l'autre.

Un panneau d'isolation thermique des deux panneaux est embroché par respectivement une suspente 1 en étant intercalé par son épaisseur entre la portion prolongeant la platine 10 après la première extrémité 2a de la suspente 1 et sa coupelle 3. La coupelle 3 est verrouillée par le verrou 5 et en appui contre le panneau, et les deux panneaux de matériau embrochés par une suspente respective sont adjacents l'un à l'autre.

Pour faciliter la perforation de chaque panneau d'isolation, le bout de la seconde extrémité 2b de chaque tige 2 peut être en pointe, en présentant un cône d'entrée. La perforation est alors nette et sans trop de déformation des bords de la perforation traversant le panneau donc sans jeu ou avec un jeu très réduit entre le panneau et la tige 2. Ceci procure une meilleure tenue du panneau d'isolation. Avant la pose du verrou 5, chaque panneau d'isolation est tenu par la coupelle 3 de sa suspente 1 sous l'action des moyens de solidarisation de la coupelle 3 avec la tige 2.

Il est évident 13 qu'un tel ensemble peut comprendre plus de deux panneaux, avantageusement autant de panneaux qu'il faut pour recouvrir l'ensemble de la toiture.

Entre les suspentes 1, au niveau de la charpente ou des éléments faisant partie ou associés à la charpente peut subsister des espaces vides. Dans ce cas, dans l'espace vide ou dans ces espaces vides peuvent être introduits un ou des panneaux d'isolation dits d'appui, chaque panneau embroché reposant au moins partiellement sur deux panneaux d'appui. Il y a alors deux couches de panneaux d'isolation ce qui renforce l'isolation.

Avantageusement les suspentes 1 peuvent être espacées de la largeur d'un panneau. La jonction de deux panneaux d'isolation embrochés se fait alors au dessus du milieu d'un panneau d'appui, ce qui est très favorable pour la conservation d'une bonne isolation.

Un film 35, typiquement un film d'isolant plastique, peut recouvrir les panneaux embrochés, le film 35 se trouvant disposé entre la coupelle 3 et le verrou 5 de chaque suspente 1, le film 35 étant percé par chaque tige 2 des suspentes 1 en assurant ainsi une étanchéité globale de l'ensemble.

Pour le maintien de ce film 35, il peut être prévu une solution de blocage mécanique entre deux surfaces, comme illustré par exemple sur les figures 2 et 5B. Dans le cas de la figure 5B, le pincement entre deux surfaces sensiblement planes est remplacé par un agencement de reliefs, ici annulaires, qui peuvent permettre de plier ou pincer un film 35 dans plusieurs zones concentriques. Sur la figure 5B, le décalage entre des reliefs annulaires R3 de la coupelle 3 et des reliefs annulaires R5 du verrou 5, dans la configuration de verrouillage, permet d'obtenir des plis rapprochés qui ont pour effet de tendre le film 35 et d'obtenir une étanchéité autour de la zone perforée.

Dans le cas de la figure 5C, le film 35 est posé en venant se coller à chaque coupelle 3 par une simple bande ou couche adhésive 33. En pratique, la bande ou couche adhésive 33 est typiquement revêtue d'un opercule de protection à retirer dans le cas d'une pose d'un film 35 en plastique tel qu'un pare-vapeur ou film analogue (pose qui s'effectue typiquement après la mise en place du matériau d'isolation 20 et de la coupelle 3). La couche adhésive 33 est ici définie par une couche de matériau adhésif déposé sur au moins une face annulaire sensiblement plane de cette coupelle 3, ici sur la collerette 3b.

La disposition annulaire continue de la couche adhésive 33 permet de réaliser, à proximité de la tige 2, un contact annulaire d'étanchéité entre le film 35 et la coupelle 3. Dans le cas d'un pare-vapeur, on limite ainsi la taille de l'ouverture autour de la tige 2. La maîtrise de la largeur de l'ouverture faite par perforation permet de limiter, voire de supprimer, la circulation d'air ou de vapeur au travers de l'ouverture d'embrochement du film 35.

Dans le cas de la figure 5c, un espacement axial e inférieur à 5 ou 10 mm est prévu par exemple entre la base 14 du verrou 5 et la coupelle 3 pourvue de la couche adhésive 33. Cet espacement axial e peut être très inférieur à l'épaisseur du matériau d'isolation 20 et permet d'éviter de pincer le film 35 ou de causer une déchirure dans ou à proximité de la portion annulaire collée du film 35.

Dans une variante, le verrou 5 peut inclure ce type de couche adhésive et/ou être accolé avec une pression d'appui contre une face annulaire correspondante du film 35.

Enfin, la présente invention concerne un procédé de montage d'un ensemble d'isolation comprenant au moins deux panneaux de matériau d'isolation sur une charpente telle que précédemment décrite.

Ce procédé comprend l'étape de fixation des suspentes 1 en divers points de la charpente, les tiges 2 desdites au moins deux suspentes 1 s'étendant parallèlement. Il est alors effectué une mise au cordeau desdites au moins deux suspentes 1 pour que les tiges 2 dépassent de la charpente de la même longueur, étant donné qu'elles doivent recevoir la même épaisseur de panneaux d'isolation thermique.

Ensuite, il est procédé à un embrochage d'un panneau de matériau sur chaque tige 2 de suspente 1, à la mise en place de la coupelle 3 sur chaque tige 2 en appui contre le panneau de matériau et à la solidarisation de la coupelle 3 sur chaque tige 2 par clippage pour le maintien de chaque panneau de matériau.

Il est procédé à la mise en place du verrou 5, le cas échéant, après insertion d'un film de protection 35 commun à toutes les tiges 2 entre chaque coupelle 3 et chaque verrou 5. Ensuite, il est procédé à la solidarisation du verrou 5 sur chaque tige 2 par pivotement, par exemple d'un quart de tour, du verrou 5 par rapport à l'axe longitudinal 8 de la tige 2 pour le verrouillage de chaque verrou 5 sur sa suspente 1.

Ce pivotement entraîne l'engagement de seconds moyens de solidarisation 6 portés par le verrou 5 avec des seconds moyens de solidarisation amovible 6 portés par la tige 2 de chaque suspente 1 en permettant un démontage ultérieur du verrou 5 de la tige 2 par pivotement inverse.

Finalement, il est procédé à l'insertion des verrous 5 des suspentes 1 dans au moins une fourrure, cette insertion n'étant possible que si le verrouillage de chaque verrou 5 a été effectif.

Le déverrouillage peut s'effectuer facilement par un pivotement du verrou 5 dans le sens inverse pour revenir à la position initiale du verrou 5. Les moyens de solidarisation du verrou 5 ne sont en aucun cas endommagés par un tel déverrouillage qui s'effectue sans effort.

Finalement, un tel ensemble ainsi formé peut être recouvert par des plaques de plâtre ou de placoplâtre.

Quelques avantages de la présente invention dans ses modes de réalisation vont être ci-après mentionnés.

Une suspente 1 selon la présente invention est conçue pour assurer une isolation sous toiture avec la garantie d'une étanchéité parfaite à l'air.

La tige 2 de la suspente 1 est réalisée exclusivement par injection d'un polymère technique haute performance, ce qui accroît sa rigidité et permet de ne pas utiliser d'élément métallique pour sa fabrication, ce qui aurait pu créer une conduction thermique.

Le verrou 5 s'assemble à la tige 2 par un système à baïonnettes, ce qui lui confère une haute résistance mécanique et une possibilité de démontage aisé et non destructif des moyens de solidarisation entre le verrou 5 et la tige 2 de la suspente 1. Ce système à ergots de baïonnette 6a est plus résistant qu'un système à clippage comme proposé par l'état de la technique.

Etant donné la solidité du verrou 5 notamment par l'utilisation de baïonnettes, la coupelle 3 peut présenter une surface d'appui la plus large possible contre le panneau isolant qui peut être le double de celle d'une coupelle d'une suspente selon l'état de la technique.

Une caractéristique particulièrement avantageuse de la présente invention est que des moyens d'interdiction de la poursuite de montage tels que des oreilles 7 peuvent empêcher l'utilisation de la suspente 1. Par exemple, du fait des oreilles 7 en position d'interdiction quand la suspente 1 n'est pas verrouillée, la fourrure 40 ne peut pas recevoir en son intérieur une telle suspente 1 non verrouillée.

Enfin, les cols de maintien 12 entourant les alésages 11 de la platine 10 de la suspente 1 permettent le pré-positionnement des vis et libèrent au moins des doigts du monteur qui n'a plus besoin de tenir les vis.

L'invention n'est nullement limitée aux modes de réalisation décrits et illustrés qui n'ont été donnés qu'à titre d'exemples.

## Revendications

1. Suspente (1), destinée au maintien de matériau d'isolation sur une charpente, comprenant :
- une tige (2) dont une première extrémité (2a) est destinée à être fixée à la charpente,
- une coupelle (3) emboîtée autour de la tige (2) et solidarisée à la tige (2) au voisinage d'une seconde extrémité (2b) de la tige (2) par des premiers moyens de solidarisation (4) formés sur la coupelle (3) coopérant avec des moyens de solidarisation complémentaires (4a) formés sur la tige (2),
- un verrou (5) emboîté autour de la tige (2) en étant plus proche de la seconde extrémité (2b) que la coupelle (3), le verrou (5) comprenant des seconds moyens de solidarisation (6) avec la tige (2) qui, dans une configuration de verrouillage, sont en prise avec des seconds moyens de solidarisation complémentaires (6a) formés sur la tige (2), la solidarisation du verrou (5) avec la tige (2) s'effectuant par un pivotement du verrou (5) par rapport à un axe longitudinal (8) de la tige (2) qui s'étend entre les deux extrémités (2a, 2b) de la tige (2),
le verrou (5) et la coupelle (3) présentant un évidement central (3a 5a) respectif pour le passage de la tige (2) en leur intérieur, le verrou (5) présentant au moins partiellement à sa périphérie une rainure (16) pour l'introduction en son intérieur des extrémités libres recourbées l'une vers l'autre des deux bords longitudinaux recourbés à 90° d'une fourrure (40),
**caractérisée en ce que,** dans la configuration de verrouillage de la suspente (1), la coupelle (3) est maintenue dans une première zone de réception (Z1) prédéfinie de la tige (2), tandis que le verrou (5) vient se bloquer dans une deuxième zone de réception (Z2) prédéfinie de la tige (2), **et en ce que** les seconds moyens de solidarisation (6) :
- sont adaptés pour s'engager dans la deuxième zone de réception (Z2) prédéfinie qui est séparée et axialement espacée de la première zone de réception (Z1) en étant plus proche de la seconde extrémité (2b) de la tige (2), et
- sont des moyens de solidarisation amovible permettant un démontage ultérieur du verrou (5) de la tige (2), et comprenant au moins une gorge (6) dans laquelle pénètre lors dudit pivotement du verrou (5) au moins deux ergots (6a) d'une connexion baïonnette formés sur la tige (2) en tant que seconds moyens de solidarisation amovible complémentaires ou inversement,
et dans laquelle les premiers moyens de solidarisation (4) qui sont sous la forme de moyens de clippage intérieurs à la coupelle (3) coopèrent avec une rainure (4a) formée sur la tige (2) en tant que premiers moyens de solidarisation complémentaires, les moyens de clippage intérieurs à la coupelle étant au nombre de trois symétriquement répartis à 120° tout autour de l'évidement central (3a) de la coupelle (3).

2. Suspente (1) selon la revendication 1, dans laquelle ladite au moins une gorge (6) est associée à une rampe d'introduction (9) pour le guidage desdites au moins deux baïonnettes (6a) vers ladite au moins une gorge (6).

3. Suspente (1) selon la revendication 1 ou 2, dans laquelle au moins une surface de came (50) est prévue sur la tige (2) ou sur le verrou (5) pour réaliser un guidage dans la connexion de type baïonnette, de façon à ce que, lors d'une rotation relative entre le verrou (5) et la tige (2) pour parvenir à la configuration de verrouillage, un serrage suivant la direction de l'axe longitudinal (8) est créé et/ou accentué entre :
- une portion annulaire du verrou (5), de préférence une base (14) du verrou (5), et
- une portion annulaire (3b) en vis-à-vis qui appartient à la coupelle (3).

4. Suspente (1) selon l'une quelconque des revendications précédentes, dans laquelle la première extrémité (2a) de la tige (2)) présente une platine (10) sensiblement plane destinée à être en appui contre une portion de la charpente, la platine (10) présentant des alésages (11) pour le passage de d'éléments de fixation sur la charpente, chaque alésage (11) présentant un col de maintien (12) destiné à entourer l'élément de fixation associé.

5. Suspente (1) selon l'une quelconque des revendications précédentes, dans laquelle la partie de la coupelle (3) la plus interne à la tige (2) porte une série de dents (13) pointant en direction de la première extrémité (2a) de la tige (2) quand la coupelle (3) est solidarisée à la tige (2).

6. Suspente selon l'une quelconque des revendications précédentes, dans laquelle au moins une face annulaire sensiblement plane, définie par la coupelle (3) et/ou par le verrou (5), présente une couche adhésive (33) et est adaptée pour être collée contre une face annulaire correspondante d'un film (35) embroché par la tige (2).

7. Suspente (1) selon l'une quelconque des revendications 1 à 6, dans laquelle le verrou (5) présente une forme bombée de section circulaire décroissante, avec une base (14) du verrou (5) orientée vers la coupelle (3) plus large qu'un sommet (15) du verrou (5) opposé à la base (14), la périphérie du verrou (5) portant deux oreilles (7) en saillie diamétralement opposées et servant, d'une part, de moyens de préhension du verrou (5) pour les doigts d'un monteur lors de son positionnement sur la tige (2) et lors d'un pivotement autour de l'axe longitudinal (8) de la tige (2) pour le verrouillage et, d'autre part, de moyens de reconnaissance visuelle (7) d'un positionnement en verrouillage du verrou (5) sur la tige (2) de par la position des oreilles (7) par rapport à l'axe longitudinal (8) de la tige (2).

8. Suspente (1) selon l'une quelconque des revendications 1 à 6, dans laquelle le verrou (5) présente, à son extrémité opposée à la coupelle (3), un sommet (15) de forme bombée de section circulaire décroissante vers l'extrémité opposée et, à son extrémité en vis-à-vis de la coupelle (3), une base (14) du verrou (5) orientée vers la coupelle (3), une forme allongée (17) servant de rallonge au verrou (5) en raccordant la base (14) et le sommet (15), la base (14), le sommet (15) et la forme allongée (17) étant d'un seul tenant.

9. Organe de maintien d'au moins un panneau de matériau isolant, **caractérisé en ce qu'**il comporte une fourrure (40) et au moins une suspente (1) selon l'une quelconque des deux revendications précédentes, dans lequel organe le verrou (5) de chaque suspente (1) est introduit dans une fourrure sensiblement rectiligne en présentant sur toute sa longueur deux bords longitudinaux recourbés à 90° définissant entre eux une largeur de fourrure et présentant leurs extrémités libres recourbées l'une vers l'autre, la largeur de la fourrure étant équivalente au diamètre de la base (14) du verrou (5) moyennant en plus un jeu pour l'introduction du verrou (5), le verrou (5) présentant au moins partiellement à sa périphérie une rainure (16) pour l'introduction des extrémités libres recourbées l'une vers l'autre de la fourrure (40) en son intérieur.

10. Charpente portant un ensemble d'isolation comprenant au moins deux panneaux de matériau d'isolation, **caractérisée en ce qu'**elle comprend au moins un organe de maintien selon la revendication précédente comportant au moins deux suspentes (1), les secondes extrémités desdites au moins deux suspentes (1) étant disposées espacées dans la longueur de la fourrure tandis que les premières extrémités desdites au moins deux suspentes (1) sont fixées à un élément respectif faisant partie de ou étant solidarisé avec la charpente, les tiges (2) desdites au moins deux suspentes (1) s'étendant parallèlement l'une à l'autre, un panneau respectif desdits au moins deux panneaux de matériau étant embroché par chaque suspente (1) en étant intercalé entre la première extrémité (2a) de la suspente (1) et sa coupelle (3), la coupelle (3) appuyant sur le panneau, lesdits au moins deux panneaux de matériau étant adjacents l'un à l'autre.

11. Charpente selon la revendication précédente, dans laquelle entre lesdites au moins deux suspentes (1) est intercalé un panneau d'isolation d'appui, chaque panneau embroché reposant au moins partiellement sur deux panneaux d'appui.

12. Charpente selon l'une quelconque des deux revendications précédentes, dans laquelle un film plastique recouvre lesdits au moins deux panneaux embrochés entre la coupelle (3) et le verrou (5) de chaque suspente (1), le film plastique étant percé par chaque tige (2) des suspentes (1).

13. Procédé de montage d'un ensemble d'isolation comprenant au moins deux panneaux de matériau d'isolation sur une charpente selon l'une quelconque des revendications 10 à 12, **caractérisé par** les étapes suivantes :
- fixation desdites au moins deux suspentes (1) en divers points de la charpente, les tiges (2) desdites au moins deux suspentes (1) s'étendant parallèlement, avec mise au cordeau desdites au moins deux suspentes (1) pour que les tiges (2) dépassent de la charpente de la même longueur,
- embrochage d'un panneau de matériau sur chaque tige (2) de suspente (1),
- mise en place de la coupelle (3) sur chaque tige (2) et solidarisation de la coupelle (3) sur chaque tige (2) par clippage pour le maintien de chaque panneau de matériau,
- mise en place du verrou (5) sur chaque tige (2), le cas échéant, après insertion d'un film de protection commun à toutes les tiges (2) entre chaque coupelle (3) et chaque verrou (5),
- solidarisation du verrou (5) sur chaque tige (2) par pivotement du verrou (5) par rapport à l'axe longitudinal (8) de la tige (2) pour le verrouillage de chaque verrou (5) sur sa suspente (1), ce pivotement entraînant l'engagement de seconds moyens de solidarisation amovible (6) portés par le verrou (5) avec des seconds moyens de solidarisation amovible complémentaires (6a) portés par la tige (2) de chaque suspente (1) en permettant un démontage ultérieur du verrou (5) de la tige (2) par pivotement inverse, et
- insertion des verrous (5) desdites au moins deux suspentes (1) dans au moins une fourrure, cette insertion n'étant possible que si le verrouillage de chaque verrou (5) a été effectif.

## Patentansprüche

1. Aufhängung (1), welche dazu vorgesehen ist, Isoliermaterial an einem Gebälk zu halten, umfassend:
- eine Stange (2), deren erstes Ende (2a) dazu vorgesehen ist, an dem Gebälk befestigt zu sein,
- eine Manschette (3), welche um die Stange (2) herum angebracht und mit der Stange (2) benachbart zu einem zweiten Ende (2b) der Stange (2) durch erste Verbindungsmittel (4) verbunden ist, welche an der Manschette (3) gebildet sind, indem sie mit komplementären Befestigungsmitteln (4a) zusammenwirken, welche an der Stange (2) gebildet sind,
- einen Riegel (5), welcher um die Stange (2) herum angebracht ist, wobei er näher an dem zweiten Ende (2b) ist als die Manschette (3), wobei der Riegel (5) zweite Verbindungsmittel (6) mit der Stange (2) umfasst, welche in einer Verriegelungskonfiguration mit zweiten komplementären Befestigungsmitteln (6a) eingreifen, welche an der Stange (2) gebildet sind, wobei die Verbindung des Riegels (5) mit der Stange (2) durch ein Schwenken des Riegels (5) gegenüber einer longitudinalen Achse (8) der Stange (2) bewirkt wird, welche sich zwischen den beiden Enden (2a, 2b) der Stange (2) erstreckt,
wobei der Riegel (5) und die Manschette (3) eine jeweilige zentrale Aussparung (3a 5a) für einen Durchgang der Stange in ihrem Inneren aufweisen, wobei der Riegel (5) wenigstens teilweise in seinem Umfang eine Nut (16) für das Einführen in sein Inneres von freien Enden aufweist, welche zueinander von den beiden gebogenen longitudinalen Rändern einer Polsterung (40) um 90° gebogen sind,
**dadurch gekennzeichnet, dass** in der Verriegelungskonfiguration der Aufhängung (1) die Manschette (3) in einer ersten vordefinierten Aufnahmezone (Z1) der Stange (2) gehalten ist, während der Riegel (5) in einer vordefinierten zweiten Aufnahmezone (Z2) der Stange (2) zum Blockieren kommt, **und dass** die zweiten Verbindungsmittel (6):
- dazu eingerichtet sind, in der vordefinierten zweiten Aufnahmezone (Z2) einzugreifen, welche von der ersten Aufnahmezone (Z1) getrennt und axial beabstandet ist, wobei sie näher zu dem zweiten Ende (2b) der Stange (2) sind, und
- lösbare Verbindungsmittel sind, welche ein späteres Demontieren des Riegels (5) von der Stange (2) erlauben, und welche wenigstens einen Hals (6) umfassen, in den während des Schwenkens des Riegels (5) wenigstens zwei Zapfen (6a) einer an der Stange (2) gebildeten Verbindung vom Bajonett-Typ als zweite lösbare komplementäre Verbindungsmittel eindringen oder umgekehrt,
und wobei die ersten Verbindungsmittel (4), die in der Form von Schnappmitteln innerhalb der Manschette (3) als komplementäre erste Verbindungsmittel mit einer an der Stange (2) gebildeten Nut (4a) zusammenwirken, wobei drei Schnappmittel innerhalb der Manschette vorliegen, welche symmetrisch um 120° beabstandet um die zentrale Öffnung (3a) der Manschette (3) verteilt sind.

2. Aufhängung (1) nach Anspruch 1, wobei der wenigstens eine Hals (6) einer Einführungsrampe (9) für das Führen der wenigstens zwei Bajonette (6a) in Richtung des wenigstens einen Halses (6) zugeordnet ist.

3. Aufhängung (1) nach Anspruch 1 oder 2, wobei wenigstens eine Nockenfläche (50) an der Stange (2) oder an dem Riegel (5) vorgesehen ist, um eine Führung in der Verbindung vom Bajonett-Typ derart auszuführen, dass während einer relativen Rotation zwischen dem Riegel (5) und der Stange (2) zum Erreichen der Verriegelungskonfiguration eine Spannung erzeugt und/oder verstärkt wird, welche der Richtung der longitudinalen Achse folgt, zwischen:
- einem ringförmigen Abschnitt des Riegels (5), vorzugsweise einer Basis (14) des Riegels (5), und
- einem gegenüberliegenden ringförmigen Abschnitt (3b), welcher der Manschette (3) zugehörig ist.

4. Aufhängung (1) nach einem der vorhergehenden Ansprüche, wobei das erste Ende (2a) der Stange (2) eine im Wesentlichen ebene Platte (10) aufweist, welche dazu vorgesehen ist, in Anlage gegen einen Abschnitt des Gebälks zu sein, wobei die Platte (10) Bohrungen (11) für den Durchgang von Elementen zur Befestigung an dem Gebälk aufweist, wobei jede Bohrung (11) einen Haltekragen (12) aufweist, welcher dazu vorgesehen ist, das zugeordnete Element zur Befestigung zu umgeben.

5. Aufhängung (1) nach einem der vorhergehenden Ansprüche, wobei der Abschnitt der Manschette (3), welcher am innersten zu der Stange (2) ist, eine Reihe von Zähnen (13) trägt, welche in Richtung des ersten Endes (2a) der Stange (2) weisen, wenn die Manschette (3) mit der Stange (2) verbunden ist.

6. Aufhängung nach einem der vorhergehenden Ansprüche, wobei wenigstens eine im Wesentlichen ebene ringförmige Fläche, welche durch die Manschette (3) und/oder durch den Riegel (5) definiert ist, eine haftfähige Schicht (33) aufweist und dazu eingerichtet ist, gegen eine entsprechende ringförmige Fläche eines Films (35) geklebt zu werden, welcher durch die Stange (2) durchbohrt ist.

7. Aufhängung (1) nach einem der Ansprüche 1 bis 6, wobei der Riegel (5) eine gewölbte Form von abnehmendem kreisförmigem Querschnitt aufweist, wobei eine Basis (14) des Riegels (5), welche in Richtung der Manschette (3) orientiert ist, größer als eine Spitze (15) des Riegels (5) gegenüber der Basis (14) ist, wobei der Umfang des Riegels (5) zwei Ohren (7) trägt, welche diametral entgegengesetzt vorspringen und einerseits als Mittel zum Greifen des Riegels (5) durch die Finger eines Monteurs während seiner Positionierung an der Stange (2) und während eines Schwenkens um die longitudinale Achse (8) der Stange (2) zur Verriegelung und andererseits als Mittel zum visuellen Erkennen (7) einer Positionierung in Verriegelungsposition des Riegels (5) an der Stange mittels der Position der Ohren (7) bezüglich der longitudinalen Achse (8) der Stange (2) dienen.

8. Aufhängung (1) nach einem der Ansprüche 1 bis 6, wobei der Riegel (5) an seinem Ende gegenüber der Manschette (3) eine Spitze (15) von gewölbter Form mit abnehmendem kreisförmigem Querschnitt in Richtung des entgegengesetzten Endes aufweist, sowie an seinem Ende gegenüber der Manschette (3) eine Basis (14) des Riegels (5), welche in Richtung der Manschette (3) orientiert ist, wobei eine längliche Form (17) zur Verlängerung des Riegels (5) dient, indem die Basis (14) und die Spitze (15) verbunden sind, wobei die Basis (14), die Spitze (15) und die längliche Form (17) einstückig sind.

9. Einrichtung zum Halten wenigstens eines Paneels aus isolierendem Material, **dadurch gekennzeichnet, dass** sie eine Polsterung (40) und wenigstens eine Aufhängung (1) nach einem der beiden vorhergehenden Ansprüche umfasst, wobei in der Einrichtung der Riegel (5) von jeder Aufhängung (1) in eine im Wesentlichen geradlinige Polsterung eingeführt ist, indem sie über ihre gesamte Länge zwei um 90° gebogene longitudinale Ränder aufweist, welche zwischen einander eine Größe der Polsterung definieren und ihre freien Enden zueinander gebogen aufweisen, wobei die Größe der Polsterung äquivalent zu dem Durchmesser der Basis (14) des Riegels (5) ist, wodurch zusätzlich ein Spiel für das Einführen des Riegels (5) geschaffen ist, wobei der Riegel (5) wenigstens teilweise an seinem Umfang eine Nut (16) für das Einführen der freien zueinander gebogenen Enden der Polsterung (40) in seinem Inneren aufweist.

10. Gebälk, welches eine Isolierungsanordnung trägt, welche wenigstens zwei Paneele aus isolierendem Material umfasst, **dadurch gekennzeichnet, dass** es wenigstens eine Einrichtung zum Halten nach dem vorhergehenden Anspruch umfasst, welche wenigstens zwei Aufhängungen (1) umfasst, wobei die zweiten Enden der wenigstens zwei Aufhängungen (1) beabstandet in der Länge der Polsterung angeordnet sind, wenn die ersten Enden der wenigstens zwei Aufhängungen (1) an einem jeweiligen Element befestigt sind, welches einen Teil des Gebälks bildet oder mit ihm verbunden ist, wobei die Stangen (2) der wenigstens zwei Aufhängungen (1) sich parallel zueinander erstrecken, wobei ein entsprechendes Paneel der wenigstens zwei Paneele aus Material durch jede Aufhängung (1) durchbohrt ist, indem sie zwischen dem ersten Ende (2a) der Aufhängung (1) und ihrer Manschette (3) eingefügt ist, wobei die Manschette (3) gegen das Paneel drückt, wobei die wenigstens zwei Paneele aus Material benachbart zueinander sind.

11. Gebälk nach dem vorhergehenden Anspruch, wobei zwischen den wenigstens zwei Aufhängungen (1) ein Anlage-Isolierungspaneel eingefügt ist, wobei jedes durchbohrte Paneel wenigstens teilweise an zwei Anlagepaneelen ruht.

12. Gebälk nach einem der beiden vorhergehenden Ansprüche, wobei ein Kunststofffilm die wenigstens zwei durchbohrten Paneele zwischen der Manschette (3) und dem Riegel (5) von jeder Aufhängung (1) bedeckt, wobei der Kunststofffilm durch jede Stange (2) der Aufhängungen (1) durchbrochen ist.

13. Verfahren zum Montieren einer Anordnung zum Isolieren, umfassend wenigstens zwei Paneele aus isolierendem Material an einem Gebälk nach einem der Ansprüche 10 bis 12, **gekennzeichnet durch** die folgenden Schritte:
- Befestigen der wenigstens zwei Aufhängungen (1) an unterschiedlichen Punkten des Gebälks, wobei sich die Stangen (2) der wenigstens zwei Aufhängungen (1) parallel erstrecken, mit Ausrichtung der wenigstens zwei Aufhängungen (1), so dass die Stangen (2) aus dem Gebälk mit derselben Länge herausragen,
- Durchbohren eines Paneels aus Material mit der Stange (2) der Aufhängung (1),
- Platzieren der Manschette (3) an der Stange (2) und Verbinden der Manschette (3) mit jeder Stange (2) durch Einschnappen, für das Halten von jedem Paneel aus Material,
- Platzieren des Riegels (5) auf jeder Stange, gegebenenfalls nach dem Einführen eines gemeinsamen Schutzfilms für alle Stangen (2) zwischen jeder Manschette (3) und jedem Riegel (5),
- Verbinden des Riegels (5) mit jeder Stange (2) durch Schwenken des Riegels (5) bezüglich der longitudinalen Achse (8) der Stange (2) für das Verriegeln von jedem Riegel (5) an seiner Aufhängung (1), wobei dieses Schwenken den Eingriff von lösbaren zweiten Verbindungsmitteln (6), welche durch den Riegel (5) getragen sind, mit komplementären lösbaren zweiten Verbindungsmitteln (6a) auslöst, welche von der Stange (2) von jeder Aufhängung (1) getragen sind, wobei ein späteres Demontieren des Riegels (5) der Stange (2) durch inverses Schwenken ermöglicht ist, und
- Einführen der Riegel (5) der wenigstens zwei Aufhängungen (1) in wenigstens eine Polsterung, wobei das Einführen nur möglich ist, wenn die Verriegelung von jedem Riegel (5) wirksam geworden ist.

## Claims

1. Hanger (1), intended to secure insulation material on a framed structure, comprising:
- a shaft (2) of which a first end (2a) is intended to be attached to the framed structure,
- a cup-like mount (3) fitted about the shaft (2) and rigidly connected to the shaft (2) in the vicinity of a second end (2b) of the shaft (2) by first rigid connection means (4) formed on the mount (3) engaging with complementary rigid connection means (4a) formed on the shaft (2),
- a latch (5) fitted about the shaft (2) being closer to the second end (2b) than the mount (3), the latch (5) comprising second rigid connection means (6) with the shaft (2) which, in a locking configuration, are engaged with second complementary rigid connection means (6a) formed on the shaft (2), the rigid connection of the latch (5) with the shaft (2) being carried out by a pivoting of the latch (5) with respect to a longitudinal axis (8) of the shaft (2) which extends between the two ends (2a, 2b) of the shaft (2),
the latch (5) and the mount (3) having a respective central recess (3a 5a) for the insertion of the shaft (2) therein, the latch (5) having at least partially at the periphery thereof a groove (16) for the introduction therein of the free ends curved towards one another of the two longitudinal edges curved at 90° of a furring member (40),
**characterised in that,** in the locking configuration of the hanger (1), the mount (3) is held in a first predefined reception zone (Z1) of the shaft (2), whereas the latch (5) is locked in a second predefined reception zone (Z2) of the shaft (2), **and in that** the second rigid connection means (6):
- are suitable for being engaged in the second predefined reception zone (Z2) which is separated and axially spaced from the first reception zone (Z1) while being closer to the second end (2b) of the shaft (2), and
- are removable rigid connection means enabling subsequent disassembly of the latch (5) from the shaft (2), and comprising at least one groove (6) into which, during said pivoting of the latch (5), at least two lugs (6a) of a bayonet connection formed on the shaft (2) penetrate as second complementary rigid connection means or vice versa,
and wherein the first rigid connection means (4) that are in the form of clipping means internal to the mount (3) are engaging with a groove (4a), formed on the shaft (2), as first complementary rigid connection means, the clipping means internal to the mount being three clipping means symmetrically distributed at 120° all around the central recess (3a) of the mount (3).

2. Hanger (1) according to claim 1, wherein said at least one groove (6) is associated with a feed ramp (9) for guiding said at least two bayonets (6a) towards said at least one groove (6).

3. Hanger (1) according to claim 1 or2, wherein at least one cam surface (50) is provided on the shaft (2) or on the latch (5) to carry out guidance in the bayonet type connection, such that, during a relative rotation between the latch (5) and the shaft (2) to arrive at the locking configuration, clamping along the direction of the longitudinal axis (8) is created and/or accentuated between:
- an annular portion of the latch (5), preferably a base (14) of the latch (5), and
- an opposite annular portion (3b) that belongs to the mount (3).

4. Hanger (1) according to any one of the preceding claims, wherein the first end (2a) of the shaft (2) has a substantially planar mounting plate (10) intended to bear against a portion of the framed structure, the mounting plate (10) having bore holes (11) for the insertion of fastening elements on the framed structure, each bore hole (11) having a securing neck (12) intended to surround the associated fastening element.

5. Hanger (1) according to any one of the preceding claims, wherein the innermost part of the mount (3) relative to the shaft (2) bears a series of teeth (13) pointing in the direction of the first end (2a) of the shaft (2) when the mount (3) is rigidly connected to the shaft (2).

6. Hanger according to any one of the preceding claims, wherein at least one substantially planar annular face, defined by the mount (3) and/or by the latch (5), has an adhesive layer (33) and is suitable for being bonded against a corresponding annular face of a film (35) pinned by the shaft (2).

7. Hanger (1) according to any one of claims 1 to 6, wherein the latch (5) has a curved shape of decreasing circular cross-section, with a base (14) of the latch (5) oriented towards the mount (3) and wider than a vertex (15) of the latch (5) opposite the base (14), the periphery of the latch (5) bearing two diametrically opposed protruding lugs (5) and serving, on one hand, as gripping means of the latch (5) for a fitter's fingers during the positioning thereof on the shaft (2) and during a pivoting about the longitudinal axis (8) of the shaft (2) for locking and, on the other, visual recognition means (7) of a locking positioning of the latch (5) on the shaft (2) due to the position of the lugs (7) with respect to the longitudinal axis (8) of the shaft (2).

8. Hanger (1) according to any one of claims 1 to 6, wherein the latch (5) has, at the end thereof opposite the mount (3), a rounded vertex (15) of decreasing circular cross-section towards the opposite end and, at the end thereof facing the mount (3), a base (14) of the latch (5) oriented towards the mount (3), an elongated shape (17) serving as an extension to the latch (5) by connecting the base (14) and the vertex (15), the base (14), the vertex (15) and the elongated shape (17) being integral.

9. Member for securing at least one panel of insulating material, **characterised in that** it includes a furring member (40) and at least one hanger (1) according to any one of the two preceding claims, in which member the latch (5) of each hanger (1) is inserted into a substantially rectilinear furring member by having all along the length thereof two longitudinal edges curved at 90° defining therebetween a furring width and have the free ends thereof curved towards one another, the width of the furring being equivalent to the diameter of the base (14) of the latch (5) by means of an additional gap for inserting the latch (5), the latch (5) having at least partially at the periphery thereof a groove (16) for inserting the free ends curved towards one another of the furring member (40) therein.

10. Framed structure bearing an insulation assembly comprising at least two panels of insulation material, **characterised in that** it comprises at least one securing member according to the preceding claim including at least two hangers (1), the second ends of said at least two hangers (1) being arranged spaced along the furring member whereas the first ends of said at least two hangers (1) are fastened to a respective element part of or rigidly connected to the framed structure, the shafts (2) of said at least two hangers (1) extending parallel with one another, a respective panel of said at least two panels of material being pinned by each hanger (1) by being inserted between the first end (2a) of the hanger (1) and the mount (3) thereof, the mount (3) bearing on the panel, said at least two panels of material being adjacent to one another.

11. Framed structure according to the preceding claim, wherein between said at least two hangers (1) is inserted a support insulation panel, each pinned panel resting at least partially on two support panels.

12. Framed structure according to any one of the two preceding claims, wherein a plastic film covers said at least two panels pinned between the mount (3) and the latch (5) of each hanger (1), the plastic film being pierced by each shaft (2) of the hangers (1).

13. Method for mounting an insulation assembly comprising at least two panels of insulation material on a framed structure according to any one of claims 10 to 12, **characterised by** the following steps:
- fastening said at least two hangers (1) at various points of the framed structure, the shafts (2) of said at least two hangers (1) extending parallel, with alignment of said at least two hangers (1) so that the rods (2) protrude from the framed structure by the same length,
- pinning of a panel of material on each hanger (1) shaft (2),
- positioning of the mount (3) on each shaft (2) and rigid connection of the mount (3) on each shaft (2) by clipping to secure each panel of material,
- positioning of the latch (5) on each shaft (2), if applicable, after inserting a protective film common to all the shafts (2) between each mount (3) and each latch (5),
- rigid connection of the latch (5) on each shaft (2) by pivoting the latch (5) with respect to the longitudinal axis (8) of the shaft (2) for locking each latch (5) on the corresponding hanger (1), this pivoting inducing the engagement of second removable rigid connection means (6) borne by the latch (5) with second complementary removable rigid connection means (6a) borne by the shaft (2) of each hanger (1) by enabling subsequent disassembly of the latch (5) from the shaft (2) by reverse pivoting, and
- insertion of the latches (5) of said at least two hangers (1) into at least one furring member, this insertion only being possible if the locking of each latch (5) has been effective.
